**Europäisches Patentamt**

**European Patent Office**

**Office européen des brevets**

(19)

(11) Veröffentlichungsnummer: **0 170 829**
**B1**

# (12) EUROPÄISCHE PATENTSCHRIFT

(45) Veröffentlichungstag der Patentschrift:
24.02.88

(21) Anmeldenummer: 85107301.5

(22) Anmeldetag: 13.06.85

(51) Int. Cl.⁴: **B 66 B 1/30**, B 66 B 5/02,
H 02 M 7/757, H 02 P 7/00

(54) Stromrichtergespeister Antrieb für einen Aufzug.

(30) Priorität: 09.08.84 CH 3821/84

(43) Veröffentlichungstag der Anmeldung:
12.02.86 Patentblatt 86/7

(45) Bekanntmachung des Hinweises auf die Patenterteilung:
24.02.88 Patentblatt 88/8

(84) Benannte Vertragsstaaten:
AT DE FR GB IT

(56) Entgegenhaltungen:
FR-A-2 260 218
FR-E-82 749
US-A-4 209 082
US-A-4 284 175
US-A-4 375 612

IBM TECHNICAL DISCLOSURE BULLETIN, Band 13,
Nr. 10, März 1971, Seiten 2904-2906, New York, US;
A.Z. WALACH: "Automatic loop-gain regulation"

(73) Patentinhaber: INVENTIO AG, Seestrasse 55, CH-6052 Hergiswil NW (CH)

(72) Erfinder: Stanyard, Ray, Buchfeldstrasse 19, CH-6033 Buchrain (CH)
Erfinder: Liechti, Hansruedi, Nielsenstrasse 1, CH-6033 Buchrain (CH)

EP 0 170 829 B1

## Beschreibung

Die Erfindung betrifft einen stromrichtergespeisten Antrieb für einen Aufzug, mit einem Gleichstrommotor, dessen Anker über einen nur eine Stromrichtung aufweisenden Stromrichter mit einer Wechselspannungsquelle verbunden ist, mit einer zwischen dem Stromrichter und dem Anker angeordneten Schalteinrichtung für die Drehmomentenumkehr, welche vier Thyristoren aufweist, wovon je zwei zwischen einen Gleichstromein- bzw. -ausgang des Stromrichters und den Anker geschaltet sind, und mit einer Löscheinrichtung, die mindestens aus einem Kondensator sowie einem Widerstand und einem weiteren Thyristor in Serie besteht und mittels welcher bei Auftreten von Überstrom die Thyristoren des Stromrichters geschützt werden und die im Ankerkreis auftretende Energie in dem Widerstand vernichtet wird.

Mit der US-PS-4 209 082 ist ein ähnlicher Antrieb bekannt geworden, bei welchem der Kondensator der Löscheinrichtung jeweils vor Beginn einer Fahrt mit dem Zünden der Stromrichterthyristoren geladen wird. Die Löscheinrichtung weist einen Detektor auf, welcher bei Netzspannungsausfall die Zündung des weiteren Thyristors veranlasst, worauf durch Entladen des Kondensators die Thyristoren des Stromrichters gelöscht werden. Bei dieser Einrichtung besteht die Möglichkeit, dass, beispielsweise wegen eines defekten Bauteiles, der Kondensator unbemerkt von der Steuerung nicht geladen wird und somit die Thyristoren nicht gelöscht werden können. Weiterhin ist als nachteilig anzusehen, dass die Löscheinrichtung bei Auftreten von nicht durch Netzspannungsausfall verursachten Überströmen nicht aktiviert werden kann. Die Schalteinrichtung für die Drehmomentenumkehr muss sowohl bei Netzspannungsausfall als auch im Normalbetrieb so gesteuert werden, dass die vom Motor im Generatorbetrieb erzeugte Energie abgeführt werden kann. Eine Lösung dieses Problemes wird nicht angegeben. Hierbei ist es überdies möglich, dass bei zu schnellem Öffnen des zwischen der Löscheinrichtung und dem Anker angeordneten Kontaktes eines Hauptschützes die im Generatorbetrieb erzeugte Energie nur unvollständig abgeführt wird.

Der Stromrichter ist bei derartigen Antrieben meist in Drehstrom-Brückenschaltung ausgeführt, wobei eine sechspulsige Ausgangsspannung erzeugt wird. Um die ungünstigen Auswirkungen der dabei auftretenden Gleichstromwelligkeit bzw. den störenden Einfluss der Oberwellen zu vermindern, können beispielsweise Filterschaltungen angewendet werden.

So ist bei einem mit der DE-OS-2 424 408 bekannt gewordenen Antrieb, welcher einen aus einer Gegenparallelschaltung zweier Drehstrom-Brückenschaltungen gebildeten Stromrichter aufweist, zwischen dem Stromrichter und dem Anker des Antriebsmotors ein Tiefpass angeordnet. Damit sollen die durch die Oberwellen hervorgerufenen Maschinengeräusche gedämpft werden. Um auch die Netzrückwirkungen klein zu halten, müssten zusätzliche Filter eingesetzt werden, was die Anlagekosten weiter verteuern würde.

Es ist andererseits bekannt, die Gleichstromwelligkeit zu verkleinern, indem Stromrichter höherer Pulszahlen angewendet werden. In der DE-AS-1 107 784 wird ein in Gegenparallelschaltung mit Saugdrosseln ausgeführter Zwölfpuls-Stromrichter für Umkehrantriebe beschrieben, bei welchem zwei Transformatoren mit sechsphasigen, gegeneinander um 30° versetzten Sekundärwicklungen in Sternschaltung für die Speisung verwendet werden. Bei diesem Stromrichter entspricht die Anzahl der Ventile der doppelten Pulszahl, wodurch die Kosten beträchtlich gesteigert werden. Berücksichtigt man ausserdem den Aufwand an Saugdrosseln, so erscheint ein solcher Stromrichter für Aufzüge nicht geeignet.

Der Erfindung liegt die Aufgabe zugrunde, einen gegenüber dem vorstehend beschriebenen Stand der Technik verbesserten stromrichtergespeisten Antrieb gemäss Oberbegriff zu schaffen, der nur eine kleine Gleichstromwelligkeit aufweist sowie lediglich geringe Netzrückwirkungen verursacht und bei dem die Thyristoren auch bei nicht durch Netzspannungsausfall verursachten Überströmen gelöscht werden können und bei kurzzeitigem Netzeinbruch kein Notstop auftritt. Es ist ausserdem Aufgabe der Erfindung, die Schalteinrichtung für die Drehmomentenumkehr derart zu verbessern, dass sie zwecks Abführung der vom Gleichstrommotor erzeugten Energie nicht umgeschaltet werden muss und dass bei normalen Betriebsverhältnissen ein schnelles und sicheres Umschalten von Motor- auf Generatorbetrieb und umgekehrt möglich ist.

Diese Aufgabe wird durch die im Patentanspruch gekennzeichnete Erfindung gelöst. Hierbei wird ein Zwölfpuls-Stromrichter vorgeschlagen, der aus zwei in Serie geschalteten Doppelsternschaltungen besteht. Der Widerstand und der weitere Thyristor der Löscheinrichtung sind über Dioden unmittelbar am Anker des Gleichstrommotors angeschlossen, wobei im Ankerkreis ein Stromwandler angeordnet ist, welcher bei Überstrom die Zündung des weiteren Thyristors veranlasst. Der Kondensator ist über eine Ladeeinrichtung ständig mit der Wechselspannungsquelle verbunden und parallel zum weiteren Thyristor und zu den dem Gleichstromeingang des Stromrichters zugeordneten Thyristoren der Schalteinrichtung geschaltet, so dass diese bei Auftreten von Überstrom und Zündung des weiteren Thyristors gelöscht werden und die im Ankerkreis auftretende Energie im Widerstand vernichtet wird. Die Schalteinrichtung weist stromrichter- und ankerseitig je einen Spannungswandler auf, wobei aus der bei Nulldurchgang des Stromes der beiden stromführenden Thyristoren ermittelten Spannungsdifferenz ein Steuersignal für die Zündung der beiden nichtstromführenden Thyristoren der Schalteinrichtung ableitbar ist.

Die mit der Erfindung erzielten Vorteile liegen darin, dass durch Anwendung eines Zwölfpuls-Stromrichters nur eine kleine Gleichstromwelligkeit und lediglich geringe Netzrückwirkungen auftreten, so dass keine Filter benötigt werden. Die vorgeschlagene Stromrichterschaltung ermöglicht die Verwendung von handelsüblichen, zu einer Baueinheit zusammengefassten Zweifach-Thyristoren, wodurch der Aufbau kostensparend vereinfacht wird. Durch die Kombination des nur für eine Stromrichtung eingerichteten Zwölfpuls-Stromrichters mit einer Schalteinrichtung für die Drehmomentenumkehr werden Thyristoren und der zu deren Zündung erforderliche Steuerungsaufwand eingespart. Mit der vorgeschlagenen Löscheinrichtung können auch nicht durch Netzspannungsausfall verursachte Überströme erfasst und der Ladezustand des Kondensators ständig überwacht werden. Hierbei ist der Kondensator derart angeordnet, dass zum Schutze aller Thyristoren lediglich ein Thyristor der Schalteinrichtung gelöscht werden muss. Durch das mittels Detektion von Überstrom verursachte Abschalten kann ein kurzer Netzeinbruch (z. B. eine Halbwelle) ohne Notstop überstanden werden. Durch die erfindungsgemässe Anordnung des Widerstandes und des weiteren Thyristors wird das Steuerungsverfahren bei Auftreten von Überstrom vereinfacht, da anderenfalls Massnahmen für die Zündung der betreffenden Thyristoren der Schalteinrichtung getroffen werden müssten. Mit der vorgeschlagenen Anordnung von Spannungswandlern kann beim Wechsel Motor - Generatorbetrieb der Nulldurchgang des Stromes genau festgestellt werden, was mit üblicherweise verwendeten Stromwandlern nicht möglich wäre.

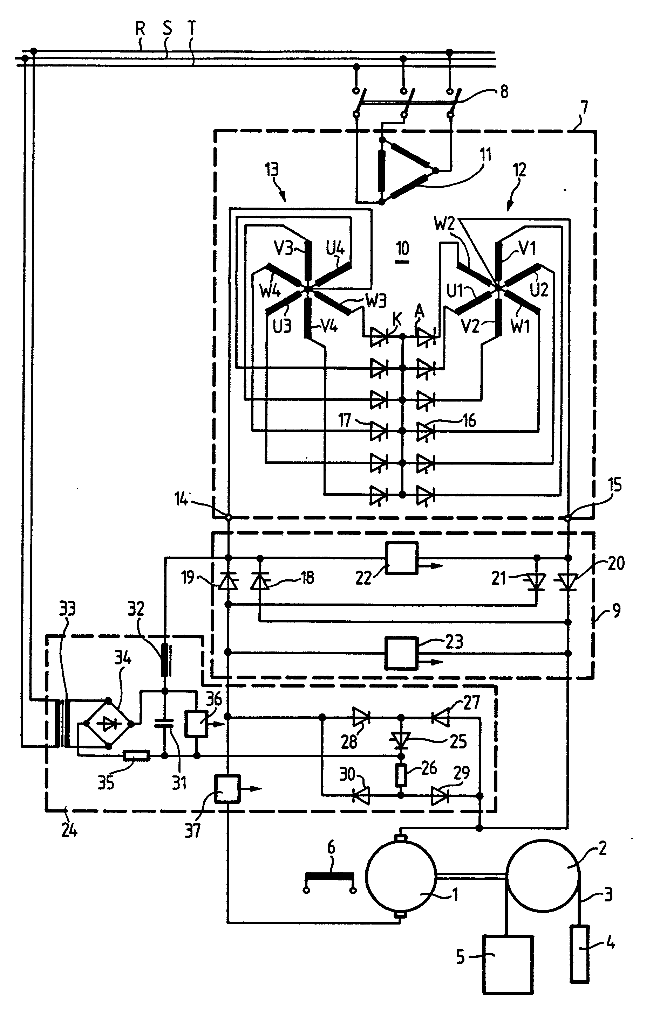

Im folgenden wird die Erfindung anhand eines auf der Zeichnung dargestellten Ausführungsbeispieles näher erläutert.

In der Zeichnung ist mit 1 der Antriebsmotor eines Aufzuges bezeichnet, welcher über eine Treibscheibe 2 eine an einem Förderseil 3 aufgehängte, über ein Gegengewicht 4 ausbalancierte Aufzugskabine 5 antreibt. Der Antriebsmotor 1 ist ein fremderregter Gleichstrommotor, dessen Erregerwicklung 6 an einer nicht dargestellten Gleichspannungsquelle angeschlossen ist. Mit 7 ist ein Stromrichter bezeichnet, der einerseits über Kontakte 8 eines Hauptschützes an einem Drehstromnetz RST und andererseits über eine Schalteinrichtung 9 für die Drehmomentenumkehr am Anker des Gleichstrommotors 1 angeschlossen ist. Der Stromrichter 7 ist ein nur für eine Stromrichtung ausgelegter Zwölfpuls-Stromrichter, dessen Transformator 10 auf der Primärseite wie üblich in Dreieck geschaltete Wicklungen 11 aufweist. Auf der Sekundärseite des Transformators 10 sind zwölf Wicklungen vorgesehen, die zu je zwei Doppelsternschaltungen 12, 13 zusammengefasst sind. Die Wicklungen U1, V1, W1, U2, V2, W2 der einen Doppelsternschaltung 12 sind gegenüber den Wicklungen U3, V3, W3, U4, V4, W4 der anderen Doppelsternschaltung 13 um 30° versetzt. Die Sternpunkte der Doppelsternschaltungen 13, 12 sind mit einem Gleichstromeingang 14 bzw. einem Gleichstromausgang 15 des Stromrichters 7 verbunden. Die den Sternpunkten entgegengesetzten Enden der Wicklungen stehen über je zwei in Serie geschaltete Thyristoren 16, 17 miteinander in Verbindung, wobei vorzugsweise zu einer Baueinheit zusammengefasste, im Handel erhältliche Zweifach-Thyristoren verwendet werden. Die Verbindung ist derart, dass jeweils eine Wicklung U1, V1, W1, U2, V2, W2 der einen Doppelsternschaltung 12 mit der Wicklung U4, V4, W4, U3, V3, W3 entgegengesetzter Phasenlage der anderen Doppelsternschaltung 13 verbunden ist, wobei ausserdem die zusammengeschalteten Anschlüsse A, K aller in Serie geschalteter Thyristoren 16, 17 miteinander in Verbindung stehen. Die Steuerelektroden der Thyristoren 16, 17 sind zwecks Drehzahlregelung des Gleichstrommotors 1 an einer Zündsteuereinrichtung einer nicht dargestellten Regelungseinrichtung angeschlossen.

Die Schalteinrichtung 9 für die Drehmomentenumkehr weist zwei Thyristoren 18, 19 auf, deren Kathoden mit dem Gleichstromeingang 14 des Stromrichters 7 und deren Anoden mit je einer Bürste des Ankers des Gleichstrommotors 1 verbunden sind. Zwei weitere Thyristoren 20, 21 sind mit ihren Anoden am Gleichstromausgang 15 und mit ihren Kathoden ebenfalls an je einer Bürste des Ankers angeschlossen. Die Steuerelektroden der Thyristoren 18 - 21 sind zum Zwecke der Umschaltung der Drehmomentenrichtung mit der Zündsteuereinrichtung verbunden, wobei jeweils ein Thyristor 18 bzw. 19 des Gleichstromeinganges 14 und ein Thyristor 21 bzw. 20 des Gleichstromausganges 15 einer bestimmten Drehmomentenrichtung zugeordnet ist. Mit 22 und 23 sind zwei Spannungswandler bezeichnet, wovon der eine am Gleichstromein- und -ausgang 14, 15 des Stromrichters 7 und der andere am Anker des Gleichstrommotors 1 angeschlossen ist. Die Spannungswandler 22, 23 sind sekundärseitig mit einer nicht dargestellten Überwachungseinrichtung verbunden, welche aus den gemessenen Spannungen eine Differenz bildet und diese mit einem vorgegebenen Wert vergleicht. Beim Übergang vom Motor- zum Generatorbetrieb und Absinken des Stromes unter den Haltestrom sperren die stromführenden Thyristoren 18, 21 bzw. 19, 20, wobei die Spannungsdifferenz den vorgegebenen Wert überschreitet und ein Steuersignal für die Zündung der nichtstromführenden Thyristoren 19, 20 bzw. 18, 21 erzeugt wird.

Eine Löscheinrichtung 24 weist eine aus einem weiteren Thyristor 25 und einem Widerstand 26 bestehende Serieschaltung auf, deren Enden über je zwei Dioden 27, 28 bzw. 29, 30 mit dem Anker des Gleichstrommotors 1 verbunden sind. Ein Kondensator 31 ist einerseits an der Kathode des weiteren Thyristors 25 und andererseits über eine Drossel 32 an den Kathoden der dem Gleichstromeingang 14 zugeordneten Thyristoren 18, 19 der Schalteinrichtung 9 angeschlossen. Der Kondensator 31 ist mit einer aus einem Transformator 33, einem Gleichrichter 34 und einem weiteren Widerstand 35 bestehenden Ladeeinrichtung verbunden, die am Drehstromnetz RST angeschlossen ist. Parallel zum Kondensator 31 ist ein Optokoppler 36 geschaltet, welcher zwecks Überwachung des Ladezustandes mit einem nicht dargestellten Sicherheitskreis verbunden ist. Im Ankerkreis ist ein Stromwandler 37 angeordnet, der sekundärseitig mit der Zündsteuereinrichtung in Verbindung steht. Bei Auftreten eines Überstromes, beispielsweise bei Netzspannungsausfall, wird der weitere Thyristor 25 gezündet, worauf sich der Kondensator 31 entgegen der Durchlassrichtung des gerade stromführenden Thyristors 18 bzw. 19 der dem Gleichstromeingang 14 zugeordneten Thyristoren 18, 19 entlädt und der betreffende Thyristor 18 bzw. 19 gelöscht und der Stromrichter 7 vom Gleichstrommotor 1 getrennt wird. Die Drossel 32 bewirkt hierbei, dass der Stromanstieg nicht zu schnell erfolgt. Der zu diesem Zeitpunkt im Ankerkreis fliessende Strom wird über die Dioden 27, 30 bzw. 28, 29, den weiteren Thyristor 25 und den Widerstand 26 geführt und durch diesen begrenzt.

**Patentansprüche**

1. Stromrichtergespeister Antrieb für einen Aufzug, mit einem Gleichstrommotor (1), dessen Anker über einen nur eine Stromrichtung aufweisenden Stromrichter (7) mit einer Wechselspannungsquelle (RST) verbunden ist, mit einer zwischen dem Stromrichter (7) und dem Anker angeordneten Schalteinrichtung (9) für die Drehmomentenumkehr, welche vier Thyristoren (18, 19, 20, 21) aufweist, wovon je zwei (18, 19 bzw. 20, 21) zwischen einen Gleichstromein- bzw. -ausgang (14, 15) des Stromrichters (7) und den Anker geschaltet sind, und mit einer Löscheinrichtung (24), die mindestens aus einem Kondensator (31) sowie einem Widerstand (26) und einem weiteren Thyristor (25) in Serie besteht und mittels welcher bei Auftreten von Überstrom die Thyristoren des Stromrichters (7) geschützt werden und die im Ankerkreis auftretende Energie in dem Widerstand (26) vernichtet wird, dadurch gekennzeichnet,
- dass der Stromrichter (7) ein Zwölfpuls-Stromrichter ist, der aus zwei in Serie geschalteten Doppelsternschaltungen besteht,
- dass die Enden der Serieschaltung aus dem weiteren Thyristor (25) und dem Widerstand (26) über je zwei Dioden (27, 30 bzw. 28, 29) am Anker des Gleichstrommotors (1) angeschlossen sind,
- dass die Löscheinrichtung (24) einen im Ankerkreis angeordneten Stromwandler (37) aufweist, welcher bei Überstrom die Zündung des weiteren Thyristors (25) veranlasst,
- dass der Kondensator (31) einerseits mit der Kathode des weiteren Thyristors (25) und andererseits mit den Kathoden der am Gleichstromeingang (14) des Stromrichters (7) angeschlossenen Thyristoren (18, 19) der Schalteinrichtung (9) verbunden ist, so dass diese bei Auftreten von Überstrom und Zündung des weiteren Thyristors (25) gelöscht werden und der Stromrichter (7) vom Gleichstrommotor (1) getrennt wird, und
- dass die Schalteinrichtung (9) zwei Spannungswandler (22, 23) aufweist, wobei der eine (22) am Gleichstromein- und -ausgang (14, 15) des Stromrichters (7) und der andere (23) am Anker angeschlossen ist, und wobei aus der bei Nulldurchgang des Stromes der beiden stromführenden Thyristoren (18, 21 bzw. 19, 20) ermittelten Spannungsdifferenz ein Steuersignal für die Zündung der beiden nichtstromführenden Thyristoren (19, 20 bzw. 18, 21) der Schalteinrichtung (9) ableitbar ist.

2. Stromrichtergespeister Antrieb für einen Aufzug, nach Patentanspruch 1, dadurch gekennzeichnet, dass ein Transformator (10) des Stromrichters (7) sekundärseitig zwölf Wicklungen aufweist, die zu je zwei Doppelsternschaltungen (12, 13) zusammengefasst sind, wobei wie an sich bekannt die Wicklungen (U1, V1, W1, U2, V2, W2) der einen Doppelsternschaltung (12) gegenüber den Wicklungen (U3, V3, W3, U4, V4, W4) der anderen Doppelsternschaltung (13) um 30° versetzt sind, und dass die Sternpunkte der Doppelsternschaltungen (13, 12) mit dem Gleichstromein- bzw. -ausgang (14, 15) des Stromrichters (7) verbunden sind, und die Wicklungen der einen Doppelsternschaltung (12) über je zwei in Serie geschaltete Thyristoren (16, 17) mit den Wicklungen entgegengesetzter Phasenlage der anderen Doppelsternschaltung (13) in Verbindung stehen, wobei die zusammengeschalteten Anschlüsse (A, K) aller in Serie geschalteter Thyristoren (16, 17) miteinander verbunden sind.

3. Stromrichtergespeister Antrieb für einen Aufzug, nach Patentanspruch 1, dadurch gekennzeichnet, dass der Kondensator (31) der Löscheinrichtung (24) wie an sich bekannt in Serie mit einer Drossel (32) geschaltet und über eine Ladeeinrichtung ständig an der Wechselstromquelle angeschlossen ist, wobei ein parallel zum Kondensator (31) geschalteter, dessen Ladezustand überwachender Optokoppler (36) vorgesehen ist.

## Revendications

1. Dispositif d'entraînement, alimenté par un convertisseur de courant, pour un ascenseur, comportant un moteur à courant continu (1), dont l'induit est relié par l'intermédiaire d'un convertisseur de courant (7) possédant un seul sens de circulation du courant, à une source de tension alternative (RST), ainsi qu'un dispositif de commutation (9) monté entre le convertisseur de courant (7) et l'induit pour inverser le couple de rotation et comportant quatre thyristors (18, 19, 20, 21) dont deux (18, 19 ou 20, 21) sont branchés entre une entrée, respectivement une sortie (14, 15), de courant continu du convertisseur de courant (7) de l'induit, et un dispositif d'extinction (24) qui est constitué au moins par un condensateur (31) ainsi que par une résistance (26) et un second thyristor (25), branchés en série, et à l'aide duquel les thyristors du convertisseur de courant (7) sont protégés lors de l'apparition d'une surintensité, et l'énergie apparaissant dans le circuit d'induit est annihilée dans la résistance (26), caractérisé par le fait

- que le convertisseur de courant (7) est un convertisseur de courant fonctionnant sur douze impulsions et qui est constitué par deux montages en étoile doubles branchés en série,
- que les extrémités du circuit série formé par le second thyristor (25) et par la résistance (26) sont raccordées, par l'intermédiaire de deux diodes respectives (27, 30 ou 28, 29) à l'induit du moteur à courant continu (1),
- que le dispositif d'extinction (24) comporte un transformateur d'intensité (37) qui est monté dans le circuit d'induit et déclenche l'amorçage du second thyristor (25) dans le cas d'une surintensité,
- que le condensateur (31) est relié d'une part à la cathode du second thyristor (25) et, d'autre part, aux cathodes des thyristors (18, 19) du dispositif de commutation (9), raccordées à l'entrée (14) de courant continu du convertisseur de courant (7) pour que ces thyristors soient éteints lors de l'apparition d'une surintensité et lors de l'amorçage du second thyristor (25) et que le convertisseur de courant (7) soit déconnecté du moteur à courant continu (1), et
- que le dispositif de commutation (9) comporte deux transformateurs de tension (22, 23), dont l'un (22) est raccordé à l'entrée et à la sortie (14, 15) de courant continu du convertisseur de courant (7) et dont l'autre (23) est raccordé à l'induit, un signal de commande pour l'amorçage des deux thyristors (19, 20 ou 18, 21) du dispositif de commutation (9), qui ne conduisent pas le courant, peut être dérivé de la différence de tension déterminée lors de l'annulation du courant des deux thyristors (18, 21 ou 19, 20) conduisant le courant.

2. Dispositif d'entraînement, alimenté par un convertisseur de courant, pour un ascenseur, selon la revendication 1, caractérisé en ce qu'un transformateur (10) du convertisseur de courant (7) comporte, sur le côte secondaire, douze enroulements qui sont rassemblés pour former respectivement deux montages en étoile doubles (12, 13), auquel cas de façon connue en soi les enroulements (U1, V1, W1, U2, V2, W2) d'un premier montage en étoile double (12) sont décalés de 30° par rapport aux enroulements (U3, V3, W3, U4, V4, W4) du second montage en étoile double (13), et que les centres des montages en étoile double (13, 12) sont reliés à l'entrée resp. à la sortie (14, 15) de courant continu du convertisseur de courant (7) et que les enroulements du premier montage en étoile double (12) sont reliés, par l'intermédiaire de respectivement deux thyristors (16, 17) branchés en série, aux enroulements en position de phase opposée, du second montage en étoile double (13), les bornes (A, K) interconnectées de tous les thyristors (16, 17) branchés en série étant reliées entre elles.

3. Dispositif d'entraînement, alimenté par un convertisseur de courant, pour un ascenseur, selon la revendication 1, caractérisé en ce que le condensateur (31) du dispositif d'extinction (24) est branché, de façon connue en soi, en série avec une bobine d'arrêt (32) et est raccordé en permanence par l'intermédiaire d'un dispositif de charge à la source de courant alternatif, auquel cas il est prévu un optocoupleur (36) branché en parallèle avec le condensateur (31) et contrôlant l'état de charge de ce dernier.

## Claims

1. Inverter-fed drive for a lift with a direct current motor (1), the armature of which is connected with an alternating voltage source (RST) by way of an inverter (7) displaying only one current direction, with a switching equipment (9) for the torque reversal, which is arranged between the inverter (7) and the armature and which displays four thyristors (18, 19, 20, 21), of which two (18, 19 or 20, 21) are each respectively connected between the armature and a direct current input or output (14, 15) of the inverter (7), and a quenching device (24), which consists at least of a capacitor (31) as well as a resistor (26) and a further thyristor (25) in series and by means of which the thyristors of the inverter (7) are protected on the occurrence of excess current and the energy arising in the armature circuit is dissipated in the resistor (26), characterised thereby,

- that the inverter (7) is a twelve-pulse inverter which consists of two double star circuits connected in series,
- that the ends of the series connection of the further thyristor (25) and the resistor (26) are each connected by way of two respective diodes (27, 30 and 28, 29) to the armature of the direct current motor (1),
- that the quenching device (24) displays a current transformer (37), which is arranged in the armature circuit and in the case of excess current causes the ignition of the further thyristor (25),
- that the capacitor (31) is connected at one end with the cathode of the further thyristor (25) and at the other end with the cathodes of the thyristors (18, 19) of the switching equipment (9), which are connected to the direct current input (14) of the inverter (7), so that these are quenched on the occurrence of excess current and ignition of the further thyristor (25) and the inverter (7) is separated from the direct current motor (1), and
- that the switching equipment (9) displays two voltage transformers (22, 23), wherein the one (22) is connected to the direct current input or output (14, 15) of the inverter (7) and the other (23) is connected to the armature and wherein a control signal for the ignition of both the thyristors (19, 20, or 18, 21) of the switching equipment (9), which are not conducting current, is derivable from the voltage difference ascertained on the zero transition of the current of both the transistors (18, 21 or 19, 20), which are conducting current.

2. Inverter-fed drive for a lift, according to patent claim 1, characterised thereby, that a transformer (10) of the inverter (7) displays twelve windings at the secondary side, which are combined into two double star circuits (12, 13), wherein the windings (U1, V1, W1, U2, V2, W2) of the one double star circuit (12) are as is in itself known displaced through 30° relative to the windings (U3, V3, W3, U4, V4, W4) of the other double star circuit (13), and that the star points of the double star circuits (13, 12) are connected with direct current input or output (14, 15) of the inverter (7) and the windings of the one double star circuit (12) stand in connection each by way of two respective series-connected thyristors (16, 17) with the windings of opposite phase position of the other double star circuit (13), wherein the terminals (A, K), which are connected together, of all series-connected thyristors (16, 17) are one connected with the other.

3. Inverter-fed drive for a lift, according to patent claims 1, characterised thereby, that the capacitor (31) of the quenching device (24) is as is in itself known connected in series with a choke (32) and constantly connected by way of a charging equipment to the alternating current source, wherein an optical coupler (36) is provided, which is connected in parallel with the capacitor (31) and monitors the state of charge thereof.

0 170 829

1